# EUROPÄISCHE PATENTSCHRIFT

(11) **EP 3 624 641 B1**
(45) Veröffentlichungstag und Bekanntmachung des Hinweises auf die Patenterteilung: **11.01.2023**
(21) Anmeldenummer: 18726133.4
(22) Anmeldetag: 18.05.2018
(51) Int. Cl.: A47B 88/487, B60R 7/04, A47B 88/453, B60N 2/75, A47B 88/473, A47B 88/457, B60N 2/07, B60N 2/02

(54) **FÜHRUNGSVORRICHTUNG**
GUIDE DEVICE
DISPOSITIF DE GUIDAGE

(30) Priorität: 18.05.2017 DE 102017208450
(43) Veröffentlichungstag der Anmeldung: 25.03.2020
(73) Patentinhaber: Schock Metallwerk GmbH, 73660 Urbach (DE)
(72) Erfinder: ZIMMERMANN, Joachim, 73614 Schorndorf (DE)
(74) Vertreter: DTS Patent- und Rechtsanwälte Schnekenbühl und Partner mbB
(86) Internationale Anmeldenummer: PCT/EP2018/063103
(87) Internationale Veröffentlichungsnummer: WO 2018/211078

(56) Entgegenhaltungen:
- EP-A1- 1 659 248
- WO-A1-2011/030473
- WO-A1-2015/096889
- WO-A2-03/049577
- DE-A1- 10 105 756
- DE-U1- 20 118 300
- DE-U1-202004 007 109
- KR-A- 20070 054 298
- US-B1- 6 971 729
- US-B1- 7 815 267
- US-B2- 6 629 738

## Beschreibung

Die vorliegende Erfindung betrifft eine Führungsvorrichtung zur verschiebbaren Lagerung eines Objekts an einem weiteren Objekt. Solche Führungsvorrichtungen sind beispielsweise aus dem Möbelbau zur Führung von Schubladen bekannt.

Die EP 1 659 248 A1 offenbart einen Rotationsdämpfer. Die US 6,629,738 B2, die US 7,815,267 B1, die KR 2007-0054298 A und die US 6,971,729 B1 offenbaren verschiedene Ausführungsformen von Auszugführungen mit Einzugseinheiten. Die WO2011/030473A1 offenbart eine Führungsvorrichtung für Fahrzeugsitze.

Der vorliegenden Erfindung liegt die Aufgabe zugrunde, eine Führungsvorrichtung bereitzustellen, welche einfach aufgebaut ist und eine effiziente Bewegungsbeeinflussung ermöglicht.

Diese Aufgabe wird erfindungsgemäß durch eine Führungsvorrichtung gemäß Anspruch 1 gelöst.

Erfindungsgemäß ist vorgesehen, dass die Führungsvorrichtung zur verschiebbaren Lagerung eines Objekts an einem weiteren Objekt Folgendes umfasst:
mindestens zwei Führungsschienen, welche mittels einer Wälzkörperanordnung relativ zueinander bewegbar sind;
eine Bewegungsvorrichtung zur Beeinflussung einer Bewegung der mindestens zwei Führungsschienen relativ zueinander.

Die Führungsvorrichtung umfasst vorzugsweise genau zwei Führungsschienen oder aber drei oder mehr als drei Führungsschienen.

Vorteilhaft kann es sein, wenn jede Führungsschiene einen im Wesentlichen C-förmig ausgebildeten Querschnitt aufweist und einen Schienenrücken umfasst, von welchem zwei mit Wälzkörperlaufbahnen versehene Schenkel seitlich weg ragen.

Ferner kann vorgesehen sein, dass nur eine oder nur zwei Führungsschienen einen im Wesentlichen C-förmig ausgebildeten Querschnitt aufweisen und einen Schienenrücken umfassen, von welchem zwei mit Wälzkörperlaufbahnen versehene Schenkel seitlich weg ragen.

Günstig kann es sein, wenn die Bewegungsvorrichtung ein erstes Kopplungselement und ein zweites Kopplungselement umfasst.

Das erste Kopplungselement und das zweite Kopplungselement sind vorzugsweise zur Beeinflussung der Bewegung der mindestens zwei Führungsschienen relativ zueinander miteinander gekoppelt oder koppelbar, insbesondere unmittelbar miteinander in Eingriff gebracht oder in Eingriff bringbar.

Das erste Kopplungselement ist vorzugsweise direkt an oder relativ zu einer ersten Führungsschiene festgelegt oder durch einen Abschnitt oder Teil der ersten Führungsschiene gebildet.

Alternativ oder ergänzend hierzu kann vorgesehen sein, dass das zweite Kopplungselement direkt an oder relativ zu einer zweiten Führungsschiene festgelegt ist oder durch einen Abschnitt oder Teil der zweiten Führungsschiene gebildet ist.

Die Führungsschienen sind bezüglich einer Verschieberichtung relativ zueinander verschiebbar.

Insbesondere ist hierbei eine lineare Verschiebung vorgesehen.

Die Kopplungselemente sind vorzugsweise bezüglich der Verschieberichtung relativ zueinander verschiebbar, insbesondere linear verschiebbar.

Es kann vorgesehen sein, dass eines der Kopplungselemente zusätzlich zur linearen Verschiebebewegung eine weitere Bewegung durchführt oder erfährt.

Insbesondere kann vorgesehen sein, dass eines der Kopplungselemente drehbar ist.

Ein oder mehrere Kopplungselemente sind vorzugsweise mittels einer Clipsverbindung, einer Rastverbindung, einer Schraubverbindung, einer Klebeverbindung, einer Schweißverbindung und/oder einer Nietverbindung und/oder durch Kunststoff-Anspritzen an der jeweiligen Führungsschiene festgelegt.

Ferner ist vorgesehen, dass eine Bewegungseinheit, insbesondere Dämpfungseinheit oder Antriebseinheit, der Bewegungsvorrichtung mittels einer Clipsverbindung, einer Rastverbindung, einer Schraubverbindung, einer Klebeverbindung, einer Schweißverbindung und/oder einer Nietverbindung an einer oder beiden Führungsschienen festgelegt ist.

Mindestens eines der Kopplungselemente erstreckt sich vorzugsweise mindestens über eine maximale Verschiebestrecke der Führungsvorrichtung. Die Kopplungselemente sind hierdurch vorzugsweise über die gesamte Verschiebestrecke hinweg kontinuierlich miteinander gekoppelt oder koppelbar. Alternativ hierzu kann vorgesehen sein, dass die Kopplungselemente nur abschnittsweise über die Verschiebestrecke hinweg miteinander gekoppelt oder koppelbar sind.

Die maximale Verschiebestrecke ergibt sich vorzugsweise durch eine Bewegung einer Führungsschiene relativ zur weiteren Führungsschiene von einem Anschlag (Endposition) an einem Ende längs der Verschieberichtung bis zu einem Anschlag (Endposition) an einem weiteren Ende längs der Verschieberichtung.

Das mindestens eine Kopplungselement erstreckt sich vorzugsweise derart und ist vorzugsweise derart angeordnet, dass das mindestens eine weitere Kopplungselement sich bei jeder beliebigen Positionierung der Führungsschienen relativ zueinander, insbesondere zwischen den beiden Endpositionen, mit dem weiteren Kopplungselement in Eingriff bringen lässt oder in Eingriff ist.

Beispielsweise bei einem als Zahnstange ausgebildeten Kopplungselement kann vorgesehen sein, dass das Kopplungselement über die maximale Verschiebestrecke hinweg mit Zähnen versehen ist.

Alternativ hierzu kann vorgesehen sein, dass das Kopplungselement nur abschnittsweise, beispielsweise in einem oder mehreren Abschnitten, mit Zähnen versehen ist, während ein oder mehrere weitere Abschnitte keine Zähne aufweisen.

Ferner kann vorgesehen sein, dass sich das beispielsweise als Zahnstange ausgebildete Kopplungselement nur über einen Abschnitt der maximalen Verschiebestrecke hinweg erstreckt.

Vorteilhaft kann es sein, wenn mindestens eines der Kopplungselemente, insbesondere ein als Zahnstange ausgebildetes Kopplungselement, einen Übergangsbereich umfasst, mittels welchem ein In-Eingriff-Bringen der beiden Kopplungselemente und/oder ein Außer-Eingriff-Bringen der beiden Kopplungselemente erleichtert oder ermöglicht wird. Beispielsweise kann eine ansteigende Zahnhöhe der Zähne einer Zahnstange und/oder eine schräge Ausrichtung der Zahnstange relativ zur Verschieberichtung vorgesehen sein. Hierdurch kann vorzugsweise ein Blockieren der Bewegungsvorrichtung beim In-Eingriff-Bringen der beiden Kopplungselemente vermieden werden.

Günstig kann es sein, wenn die Bewegungsvorrichtung mindestens ein Kopplungselement umfasst, welches an einem Schienenrücken einer der Führungsschienen und/oder an einem Schenkel einer der Führungsschienen angeordnet, insbesondere festgelegt, ist.

Das mindestens eine Kopplungselement ist vorzugsweise in einem Innenraum zwischen den beiden Führungsschienen und/oder in einem Innenraum zwischen zwei Schenkeln einer der Führungsschienen oder beider Führungsschienen angeordnet, insbesondere festgelegt.

Günstig kann es sein, wenn mindestens ein Kopplungselement an einer Innenseite eines Schenkels einer Führungsschiene angeordnet ist. Insbesondere für einen Toleranzausgleich kann hierbei ein Spalt von beispielsweise höchstens ungefähr 5 mm, beispielsweise höchstens ungefähr 3 mm, insbesondere höchstens ungefähr 1 mm, zwischen dem Kopplungselement und dem Schenkel vorgesehen sein.

Insbesondere bei starker Beanspruchung des Kopplungselements kann dieses sich dann an den Schenkel anlegen und hierdurch gestützt werden.

Eine dem Kopplungselement zugewandte Seite des Schenkels ist insbesondere eine Innenseite und/oder eine einer Wälzkörperlaufbahn des Schenkels abgewandte Seite.

Ferner kann vorgesehen sein, dass mindestens ein Kopplungselement mittels einer Federvorrichtung, beispielsweise mittels mindestens einer Blattfeder, gegen und/oder in Richtung mindestens eines weiteren Kopplungselements vorgespannt und/oder gegen eine Auslenkung durch das mindestens eine weitere Kopplungselement abgestützt ist. Beispielsweise kann eine Federvorrichtung zwischen einem als Zahnstange ausgebildeten Kopplungselement einerseits und einem Schenkel einer Führungsschiene andererseits angeordnet sein.

Alternativ oder ergänzend hierzu kann vorgesehen sein, dass ein als Zahnrad ausgebildetes Kopplungselement mittels einer Federvorrichtung gegen und/oder in Richtung mindestens eines weiteren Kopplungselements vorgespannt und/oder gegen eine Auslenkung durch das mindestens eine weitere Kopplungselement abgestützt ist.

Die Bewegungsvorrichtung umfasst insbesondere ein als Rotationselement, insbesondere als Zahnrad, ausgebildetes Kopplungselement und/oder ein oder mehrere als Linearelemente, insbesondere als Zahnstange, ausgebildete Kopplungselemente.

Die Rotationsachse des Rotationselements verläuft vorzugsweise zumindest näherungsweise senkrecht zu einer Erstreckungsebene, parallel zu welcher sich mindestens ein Schienenrücken mindestens einer Führungsschiene erstreckt.

Alternativ hierzu kann vorgesehen sein, dass eine Rotationsachse des Rotationselements zumindest näherungsweise parallel zu einer Erstreckungsebene verläuft, parallel zu welcher sich mindestens ein Schienenrücken mindestens einer Führungsschiene erstreckt.

Zudem könnte eine schräg zur Erstreckungsebene verlaufende Ausrichtung der Rotationsachse des Rotationselements vorgesehen sein.

Günstig kann es sein, wenn die Bewegungsvorrichtung ein, zwei oder mehr als zwei Kopplungselemente umfasst, welche vollständig innerhalb eines zwischen den mindestens zwei Führungsschienen gebildeten Zwischenraums angeordnet sind.

Der Zwischenraum ist dabei insbesondere von den zwei Schienenrücken und den Schenkeln der Führungsschienen begrenzt.

Insbesondere im vollständig eingeschobenen Zustand der Führungsvorrichtung, welcher insbesondere ein Zustand ist, in welchem die beiden Führungsschienen einander maximal überdecken, sind das eine, die zwei oder die mehr als zwei Kopplungselemente vorzugsweise vollständig innerhalb des Zwischenraums angeordnet.

Ferner kann vorgesehen sein, dass ein, zwei oder mehr als zwei Kopplungselemente teilweise oder vollständig außerhalb des Zwischenraums angeordnet sind.

Die Bewegungsvorrichtung ist als eine Dämpfungsvorrichtung und/oder als eine Antriebsvorrichtung ausgebildet.

Eine Dämpfungsvorrichtung umfasst vorzugsweise eine Dämpfungseinheit. Unter "Dämpfung" ist in dieser Beschreibung und den beigefügten Ansprüchen insbesondere eine bremsende und/oder verlangsamende und/oder zum Stillstand bringende und/oder im Stillstand haltende Wirkung zu verstehen. Eine Dämpfungswirkung ist vorzugsweise so gewählt, dass bei zunehmender Beschleunigung der Führungsschienen relativ zueinander eine durch die Dämpfung wirkende Gegenkraft ebenfalls zunimmt.

Günstig kann es sein, wenn durch die Dämpfungsvorrichtung ein Losbrechmoment, welches überwunden werden muss, um die Führungsschienen relativ zueinander in Bewegung zu versetzen, erhöht wird, beispielsweise um einen Faktor von 10, insbesondere 50, vorzugsweise 100, verglichen mit einem Losbrechmoment, welches die Führungsschienen mit der Wälzkörperanordnung ohne Bewegungsvorrichtung aufweisen.

Mittels der Dämpfungsvorrichtung ist vorzugsweise einstellbar und/oder wählbar und/oder steuerbar, welche Verschiebekraft zum Verschieben der Führungsschienen relativ zueinander aufgebracht werden muss, beispielsweise um diese mit einer Relativgeschwindigkeit von ungefähr 0,1 m/s, 1 m/s oder 10 m/s zu bewegen.

Durch die Dämpfungsvorrichtung ergibt sich vorzugsweise eine zumindest näherungsweise konstante Verschiebekraft und/oder ein konstanter Widerstand zur Bewegung der Führungsschienen über den gesamten Verschiebeweg (Verschiebestrecke) hinweg, insbesondere bei gleichmäßiger Verschiebegeschwindigkeit.

Eine Antriebsvorrichtung umfasst insbesondere eine Antriebseinheit.

Die Dämpfungseinheit und/oder die Antriebseinheit sind erfindungsgemäß in einen Schienenrücken einer Führungsschiene integriert.

Der Schienenrücken umfasst hierzu vorzugweise eine Öffnung, in welcher die Dämpfungseinheit und/oder Antriebseinheit montiert oder montierbar ist. Die Dämpfungseinheit und/oder Antriebseinheit schließt vorzugsweise im Wesentlichen bündig mit einer dem Zwischenraum abgewandten Außenseite des Schienenrückens ab.

Das Kopplungselement ist vorzugsweise mittels einer Welle mit der Dämpfungseinheit und/oder der Antriebseinheit verbunden.

Als Dämpfungseinheit kann beispielsweise ein Fluiddämpfer, insbesondere ein Flüssigkeitsdämpfer, vorgesehen sein.

Als Antriebseinheit ist insbesondere ein Elektromotor vorgesehen.

Es kann vorgesehen sein, dass die Führungsvorrichtung einen Selbsteinzug umfasst, mittels welchem die Führungsschienen in eine vollständig eingeschobene Stellung bringbar sind.

Es kann jedoch auch vorgesehen sein, dass die Führungsvorrichtung keinen Selbsteinzug umfasst.

Vorteilhaft kann es sein, wenn die Führungsvorrichtung ein oder mehrere Rastvorrichtungen zur Verrastung der Führungsschienen in unterschiedlichen Positionen relativ zueinander umfasst.

Die Führungsschienen sind bezüglich einer senkrecht zu Schienenrücken der beiden Führungsschienen und längs einer Verschieberichtung verlaufenden Längsmittelebene vorzugsweise spiegelsymmetrisch ausgebildet.

Die erfindungsgemäße Führungsvorrichtung eignet sich insbesondere zur Verwendung in einem Verschiebesystem.

Die vorliegende Erfindung betrifft daher auch ein Verschiebesystem, welches mindestens zwei Objekte und eine Führungsvorrichtung, insbesondere eine erfindungsgemäße Führungsvorrichtung, umfasst. Die Führungsvorrichtung dient insbesondere dazu, eines der beiden Objekte relativ zu dem weiteren der beiden Objekte verschiebbar an dem weiteren Objekt zu lagern.

Das Verschiebesystem kann ferner zwei oder mehr Führungsvorrichtungen, insbesondere erfindungsgemäße Führungsvorrichtungen, umfassen, insbesondere zur Lagerung des einen Objekts an dem weiteren der beiden Objekte.

Hierbei kann vorgesehen sein, dass nur eine der Führungsvorrichtungen eine Bewegungsvorrichtung, insbesondere eine Dämpfungsvorrichtung und/oder Antriebsvorrichtung, umfasst.

Ferner kann vorgesehen sein, dass eine der Führungsvorrichtungen eine als Dämpfungsvorrichtung ausgebildete Bewegungsvorrichtung umfasst, während die weitere der Führungsvorrichtungen beispielsweise eine als Antriebsvorrichtung ausgebildete Bewegungsvorrichtung umfasst.

Die Führungsvorrichtung ist vorzugsweise bezüglich einer Schwerkraftrichtung zwischen den beiden Objekten angeordnet.

Ein oder mehrere Schienenrücken von Führungsschienen der Führungsvorrichtung, insbesondere die Erstreckungsebenen, sind vorzugsweise im Wesentlichen senkrecht zur Schwerkraftrichtung oder schräg hierzu ausgerichtet.

Insbesondere kann vorgesehen sein, dass der eine oder die mehreren Schienenrücken mit der Schwerkraftrichtung einen Winkel von mindestens ungefähr 60°, insbesondere mindestens ungefähr 70°, beispielsweise mindestens ungefähr 80°, einschließen.

Die Führungsschienen der Führungsvorrichtung sind vorzugsweise liegend eingebaut.

Die Wälzkörperlaufbahnen sind dabei vorzugsweise in horizontaler Richtung nebeneinander angeordnet.

Dies ist insbesondere im Gegensatz zu der bei Schubladenführungen üblichen stehenden Ausrichtung, bei welcher die Wälzkörperlaufbahnen längs der Schwerkraftrichtung übereinander angeordnet sind.

Das Verschiebesystem ist insbesondere eine Armlehnenvorrichtung. Eines der beiden Objekte ist vorzugsweise ein Armauflageelement. Das weitere der beiden Objekte ist vorzugsweise eine Mittelkonsole eines Kraftfahrzeugs.

Das erfindungsgemäße Verschiebesystem eignet sich somit insbesondere zur Verwendung in einem Kraftfahrzeug.

Die vorliegende Erfindung betrifft daher auch ein Kraftfahrzeug, welches eine oder mehrere Führungsvorrichtungen, insbesondere erfindungsgemäße Führungsvorrichtungen, zur verschiebbaren Lagerung von Bauteilen des Kraftfahrzeugs relativ zueinander umfasst.

Insbesondere umfasst das Fahrzeug eine Armlehnenvorrichtung, welche ein erfindungsgemäßes Verschiebesystem umfasst oder bildet.

Die Bauteile des Kraftfahrzeugs sind dann insbesondere die relativ zueinander verschiebbaren Objekte.

Die erfindungsgemäße Führungsvorrichtung und/oder das erfindungsgemäße Verschiebesystem eignen sich ferner vorzugsweise zur Verwendung für ausziehbare Staufächer und/oder Tablare und/oder Arbeitstische und/oder X-Y-Tische und/oder einen verschiebbaren, insbesondere ausziehbaren, Kofferraumboden eines Kraftfahrzeugs.

Beispielsweise kann die Führungsvorrichtung zur verschiebbaren Anordnung eines Arbeitstisches in einem Fahrzeug, insbesondere einem Kraftfahrzeug, einem Flugzeug, etc., zum Einsatz kommen.

Durch die Verwendung von mehreren, insbesondere quer oder senkrecht zueinander ausgerichteten Führungsvorrichtungen ergibt sich vorzugsweise eine Verschiebbarkeit eines Objekts relativ zu einem weiteren Objekt in mehreren voneinander verschiedenen Raumrichtungen, beispielsweise in einer Ebene.

Bei weiteren Ausgestaltungen einer Führungsvorrichtung kann vorgesehen sein, dass ein Wälzkörperkäfig der Wälzkörperanordnung von der Bewegungsvorrichtung unabhängig, insbesondere nicht mit Kopplungselementen zwangsgekoppelt, ist.

Es kann jedoch auch vorgesehen sein, dass ein Kopplungselement, insbesondere ein Rotationselement, beispielsweise ein Zahnrad, an dem Wälzkörperkäfig angeordnet, insbesondere drehbar gelagert, ist. Vorzugsweise sind dann beide Führungsschienen mit weiteren Kopplungselementen, insbesondere Linearelementen, beispielsweise Zahnstangen, versehen. Hierdurch ergibt sich eine Zwangskopplung zwischen den Führungsschienen und dem Wälzkörperkäfig.

Eine Dämpfungsvorrichtung und/oder Antriebsvorrichtung kann insbesondere hierbei in den Wälzkörperkäfig integriert und/oder daran angeordnet sein.

Eine Rotationsachse des Rotationselements ist hierzu vorzugsweise parallel zu einer Erstreckungsebene, parallel zu welcher sich ein oder mehrere Schienenrücken der Führungsschienen erstrecken.

Weitere bevorzugte Merkmale und/oder Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Führungsvorrichtung;
- Fig. 2: eine schematische Draufsicht auf eine Oberseite der Führungsvorrichtung aus Fig. 1;
- Fig. 3: einen schematischen vertikalen Querschnitt durch die Führungsvorrichtung längs der Linie 3-3 in Fig. 2; und
- Fig. 4: eine schematische Seitenansicht der Führungsvorrichtung aus Fig. 1 mit Blickrichtung in Richtung des Pfeiles 4 in Fig. 2.

Gleiche oder funktional äquivalente Elemente sind in sämtlichen Figuren mit denselben Bezugszeichen versehen.

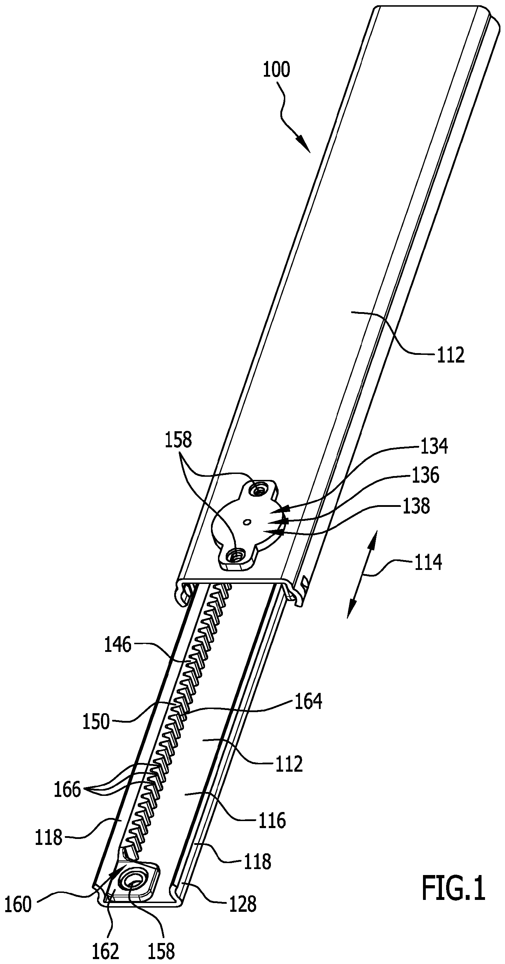

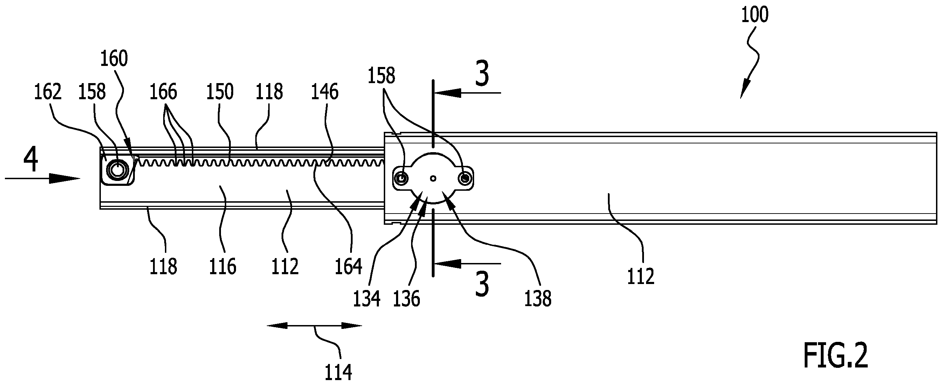

Eine in den Fig. 1 bis 4 dargestellte Ausführungsform einer als Ganzes mit 100 bezeichneten Führungsvorrichtung kommt beispielsweise als Bestandteil eines Verschiebesystems 102 in einem Kraftfahrzeug zum Einsatz.

Das Verschiebesystem 102 ist insbesondere eine Armlehnenvorrichtung 104, bei welcher die Führungsvorrichtung 100 zur verschiebbaren Lagerung eines Armauflageelements 106 an einer Mittelkonsole 108 dient.

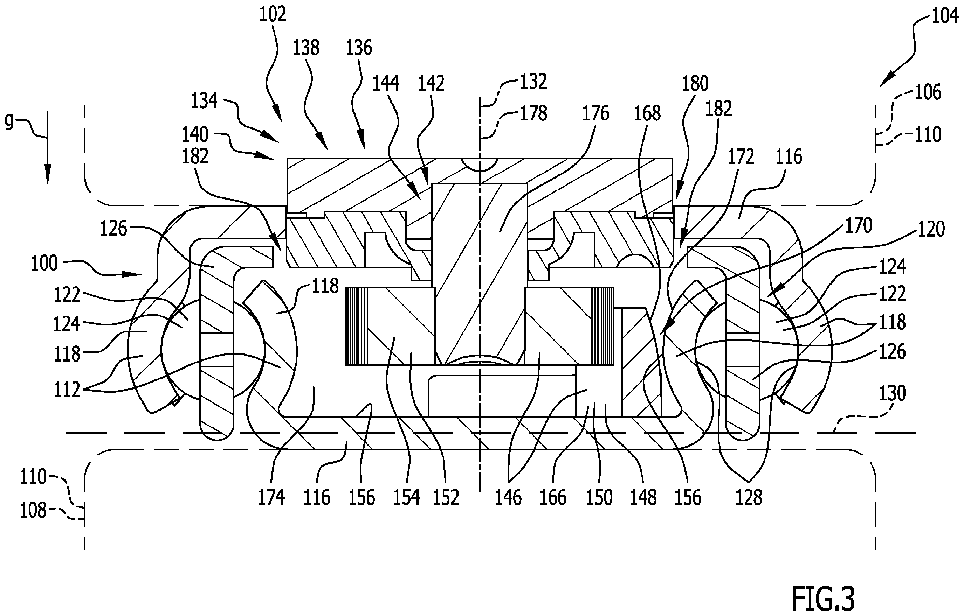

Das Armauflageelement 106 und die Mittelkonsole 108 bilden somit insbesondere Objekte 110, welche mittels der Führungsvorrichtung 100 relativ zueinander verschiebbar sind (siehe insbesondere Fig. 3).

Die Führungsvorrichtung 100 umfasst vorzugsweise zwei Führungsschienen 112.

Es können jedoch auch mehr als zwei Führungsschienen 112, beispielsweise drei, vier oder mehr Führungsschienen 112 vorgesehen sein. Insbesondere kann sich durch die erhöhte Anzahl von Führungsschienen 112 ein längerer Verschiebeweg (Verschiebestrecke) längs einer Verschieberichtung 114 ergeben.

Mindestens eine Führungsschiene 112, insbesondere beide Führungsschienen 112, umfassen vorzugsweise jeweils einen Schienenrücken 116, welcher insbesondere im Wesentlichen flach und eben ausgebildet ist.

An einander gegenüberliegenden Seiten des Schienenrückens 116 sind zwei Schenkel 118 vorgesehen. Die Schenkel 118 ragen insbesondere seitlich von dem Schienenrücken 116 weg.

Die Schenkel 118 und der Schienenrücken 116 weisen insgesamt eine im Querschnitt im Wesentlichen C-förmige Ausgestaltung auf.

Der Querschnitt ist dabei insbesondere in einer senkrecht zur Verschieberichtung 114 verlaufenden Ebene genommen.

Die beiden Führungsschienen 112 sind mittels einer Wälzkörperanordnung 120 relativ zueinander verschiebbar gelagert.

Die Wälzkörperanordnung 120 umfasst insbesondere mehrere Wälzkörper 122, insbesondere Kugeln 124.

Die Wälzkörper 122 sind mittels eines Wälzkörperkäfigs 126 relativ zueinander positioniert und zwischen den beiden Führungsschienen 112 drehbar gehalten.

Die Wälzkörper 122 können insbesondere an Wälzkörperlaufbahnen 128 der Führungsschienen 112 abrollen.

Die Wälzkörperlaufbahnen 128 sind an den Schenkeln 118 der Führungsschienen 112 gebildet.

Die Schenkel 118 und der Schienenrücken 116 einer jeden Führungsschiene 112 sind vorzugsweise gemeinsam aus einem einstückigen Blechmaterial gebildet, insbesondere durch Umformen eines Blechstreifens.

Beide Schienenrücken 116 verlaufen vorzugsweise im Wesentlichen parallel zueinander und parallel zu einer Erstreckungsebene 130.

Im montierten Zustand der Führungsvorrichtung 100 sind die Führungsschienen 112 vorzugsweise so ausgerichtet, dass die Erstreckungsebene 130 im Wesentlichen horizontal ausgerichtet ist.

Eine senkrecht zur Erstreckungsebene 130 und längs der Verschieberichtung 114 verlaufende Längsmittelebene 132 der Führungsvorrichtung 100 ist vorzugsweise im Wesentlichen vertikal und somit parallel zu einer Schwerkraftrichtung g ausgerichtet.

Die Längsmittelebene 132 ist insbesondere eine Symmetrieebene der Führungsvorrichtung 100.

Insbesondere sind die Führungsschienen 112 und die Wälzkörperanordnung 120 vorzugsweise im Wesentlichen spiegelsymmetrisch bezüglich der Längsmittelebene 132 ausgebildet.

Wie den Fig. 1 bis 4 zu entnehmen ist, umfasst die Führungsvorrichtung 100 eine Bewegungsvorrichtung 134 zur Beeinflussung einer Bewegung der Führungsschiene 112 relativ zueinander.

Die Bewegungsvorrichtung 134 ist oder umfasst insbesondere eine Dämpfungsvorrichtung 136 und/oder eine Antriebsvorrichtung 138.

Mittels der Dämpfungsvorrichtung 136 kann vorzugsweise eine Bewegung der einen Führungsschiene 112 relativ zu der weiteren Führungsschiene 112 gedämpft werden. Insbesondere kann eine gewünschte Verschiebekraft und/oder ein gewünschter Widerstand bei der Bewegung der Führungsschienen 112 relativ zueinander eingestellt und/oder gewählt werden oder sein.

Mittels der Antriebsvorrichtung 138 kann vorzugsweise eine Bewegung der Führungsschiene 112 relativ zu der weiteren Führungsschiene 112 automatisiert werden. Insbesondere kann ein motorischer Antrieb vorgesehen sein.

Die Bewegungsvorrichtung 134 umfasst eine Bewegungseinheit 140.

Die Bewegungseinheit 140 ist als Dämpfungseinheit 142 und/oder als Antriebseinheit 144 ausgebildet.

Zur Beeinflussung der Bewegung der beiden Führungsschienen 112 relativ zueinander sind diese vorzugsweise miteinander gekoppelt oder koppelbar.

Die Bewegungsvorrichtung 134 umfasst hierzu insbesondere ein oder mehrere Kopplungselemente 146.

Insbesondere ist ein Kopplungselement 146 an der einen Führungsschiene 112 und ein weiteres Kopplungselement 146 an der weiteren Führungsschiene 112 angeordnet.

Ein Kopplungselement 146 ist beispielsweise als ein Linearelement 148, insbesondere als eine Zahnstange 150, ausgebildet.

Ein weiteres Kopplungselement 146 ist beispielsweise als ein Rotationselement 152, insbesondere als ein Zahnrad 154, ausgebildet.

Die beiden Kopplungselemente 146 sind vorzugsweise über einen gesamten maximalen Verschiebeweg (Verschiebestrecke) hinweg miteinander in Eingriff (miteinander gekoppelt).

Somit kann vorzugsweise in jeder beliebigen Position der Führungsschienen 112 relativ zueinander eine Bewegungsbeeinflussung ermöglicht werden.

Das beispielsweise als Zahnstange 150 ausgebildete Kopplungselement 146 ist vorzugsweise an einer Innenseite 156 eines Schienenrückens 116 einer Führungsschiene 112 angeordnet. Insbesondere sind ein oder mehrere Verbindungselemente 158 zum Festlegen des Kopplungselements 146 an der Innenseite 156 des Schienenrückens 116 vorgesehen.

Die Verbindungselemente 158 können insbesondere Clipselemente, Rastelemente, Nieten, Schweißstellen, Klebestellen und/oder Schrauben sein.

Insbesondere sind zwei Verbindungselemente 158 an einander gegenüberliegenden Enden 160 des Kopplungselements 146 vorgesehen.

Das Kopplungselement 146 umfasst insbesondere an den Enden 160 zwei Verbindungsabschnitte 162, an welchen die Verbindungselemente 158 angreifen.

Zwischen den zwei Verbindungsabschnitten 162 ist insbesondere ein Kopplungsabschnitt 164 des Kopplungselements 146 angeordnet und/oder ausgebildet.

Der Kopplungsabschnitt 164 ist insbesondere eine Zahnstange 150, welche zahlreiche Zähne 166 umfasst.

Die Zähne 166 sind vorzugsweise so ausgerichtet, dass ein mit der Zahnstange 150 in Eingriff zu bringendes Zahnrad 154 in einer parallel zur Erstreckungsebene 130 und senkrecht zur Verschieberichtung 114 verlaufenden Richtung an der Zahnstange 150 angreift.

Eine den Zähnen 166 abgewandte Rückseite der Zahnstange 150 ist vorzugsweise benachbart zu einem Schenkel 118 einer Führungsschiene 112.

Es kann vorgesehen sein, dass zwischen der Zahnstange 150 und dem Schenkel 118 ein Spalt 170 gebildet ist, insbesondere zur Ermöglichung eines Toleranzausgleichs.

Es kann jedoch auch vorgesehen sein, dass die Rückseite 168 der Zahnstange 150 temporär im Betrieb oder permanent direkt an dem Schenkel 118 anliegt.

Eine der Zahnstange 150 zugewandte Seite des Schenkels 118 ist insbesondere eine Innenseite 156, welche insbesondere einer Wälzkörperlaufbahn 128 desselben Schenkels 118 abgewandt und/oder gegenüberliegend ist.

Diese Innenseite 156 des Schenkels 118 bildet insbesondere eine Anlagefläche 172 des Schenkels 118 zur Anlage des Kopplungselements 146.

Das Kopplungselement 146 kann sich somit insbesondere an dem Schenkel 118 abstützen, beispielsweise wenn zu starke Kräfte auf das Kopplungselement 146 wirken und dieses hierdurch deformiert, insbesondere ausgelenkt, wird.

Das gesamte als Kopplungselement 146 ausgebildete Linearelement 148, insbesondere die Zahnstange 150, ist vorzugsweise in einem Zwischenraum 174 der Führungsvorrichtung 100 angeordnet.

Der Zwischenraum 174 ist insbesondere der von den beiden Schienenrücken 116 und den Schenkeln 118 eingeschlossene Raum.

Die Innenseiten 156 der Schienenrücken 116 sowie der Schenkel 118 sind somit die dem Zwischenraum 174 zugewandten Seiten der Schienenrücken 116 bzw. der Schenkel 118.

Wie insbesondere Fig. 3 zu entnehmen ist, ist das als Rotationselement 152, insbesondere als Zahnrad 154, ausgebildete Kopplungselement 146 mittels einer Welle 176 mit der Dämpfungseinheit 142 bzw. der Antriebseinheit 144 verbunden.

Über die Welle 146 wird somit durch Rotation des Rotationselements 152 die Dämpfungseinheit 142 betätigt. Ferner kann über die Welle 176 ein von der Antriebseinheit 144 erzeugtes Drehmoment auf das Rotationselement 152 übertragen werden, um letztlich die Führungsschienen 112 relativ zueinander zu bewegen.

Die Welle 176 und das Rotationselement 152 sind insbesondere um eine Rotationsachse 178 drehbar gelagert.

Die Rotationsachse 178 verläuft insbesondere zumindest näherungsweise in der Längsmittelebene 132.

Vorzugsweise ist die Rotationsachse 178 im Wesentlichen senkrecht zur Erstreckungsebene 130 ausgerichtet.

Die Dämpfungseinheit 142 und/oder die Antriebseinheit 144 sind in einen Schienenrücken 116 einer Führungsschiene 112 integriert.

Dieser Schienenrücken 116 der Führungsschiene 112 umfasst hierzu insbesondere eine Öffnung 180 zur Aufnahme der Dämpfungseinheit 142 bzw. der Antriebseinheit 114.

Bei der in den Fig. 1 bis 4 dargestellten Ausführungsform der Führungsvorrichtung 100 steht die Dämpfungseinheit 142 und/oder die Antriebseinheit 144 aus dem Zwischenraum 174 durch die Öffnung 180 nach außen über den Schienenrücken 116 vor.

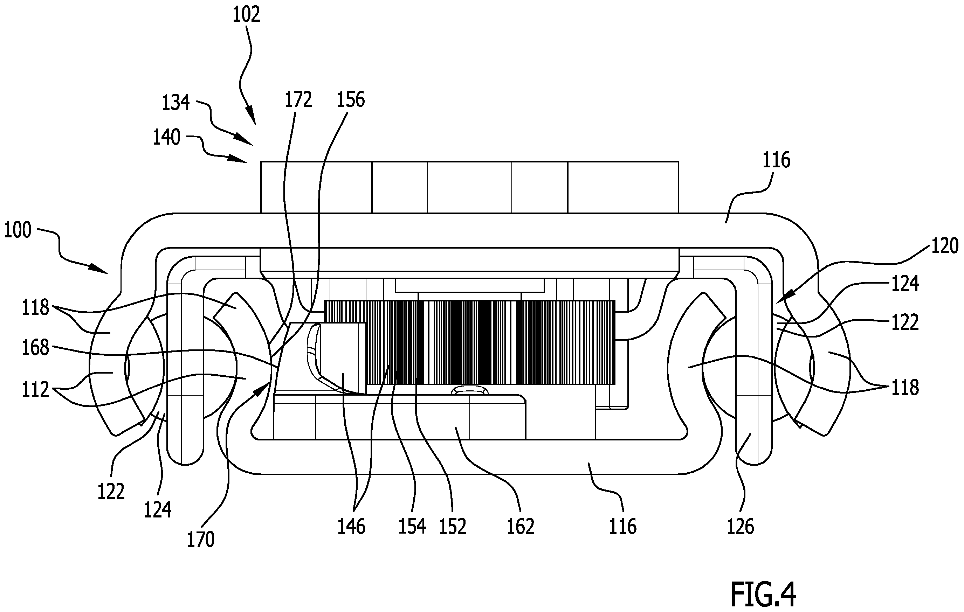

Wie ferner den Fig. 3 und 4 zu entnehmen ist, weist der Wälzkörperkäfig 126 vorzugsweise eine Aussparung 182 auf.

Die beiden mit Wälzkörpern 122 versehenen seitlichen Abschnitte des Wälzkörperkäfigs 126 greifen somit die Dämpfungseinheit 142 und/oder die Antriebseinheit 144 um.

Hierdurch kann vorzugsweise vermieden werden, dass die Verwendung einer Dämpfungsvorrichtung 136 und/oder einer Antriebsvorrichtung 138 eine Verkürzung des maximalen Verschiebewegs (Verschiebestrecke) zur Folge hat. Insbesondere die Verwendung einer Dämpfungseinheit 142 ermöglicht vorzugsweise eine relativ schwergängige Betätigung, insbesondere Verschiebung, der Führungsschienen 112 relativ zueinander.

Beispielsweise bei einer Verwendung der Führungsvorrichtung 100 zur verschiebbaren Lagerung eines Armauflageelements 106 kann hierdurch verhindert werden, dass sich das Armauflageelement 106 allzu leicht in unerwünschte Positionen verschieben lässt oder gar bei der Beschleunigung oder dem Abbremsen des Kraftfahrzeugs selbsttätig die Position ändert. Die Verwendung einer Antriebsvorrichtung 138 hingegen ermöglicht die automatisierte, insbesondere motorische, Verschiebung der Führungsschienen 112 relativ zueinander. Hierdurch können insbesondere ausziehbare Schubladen oder Kofferraumböden besonders komfortabel betätigt werden.

Durch die Verwendung von wälzkörpergelagerten Führungsschienen 112 wird zugleich eine hohe Stabilität der Führungsvorrichtung 100 erzielt. Dies ermöglicht einerseits eine hohe mechanische Belastung des zu verschiebenden Objekts 110 sowie eine hohe Qualität in optischer, akustischer und haptischer Hinsicht.

### Bezugszeichenliste

- 100: Führungsvorrichtung
- 102: Verschiebesystem
- 104: Armlehnenvorrichtung
- 106: Armauflageelement
- 108: Mittelkonsole
- 110: Objekt
- 112: Führungsschiene
- 114: Verschieberichtung
- 116: Schienenrücken
- 118: Schenkel
- 120: Wälzkörperanordnung
- 122: Wälzkörper
- 124: Kugel
- 126: Wälzkörperkäfig
- 128: Wälzkörperlaufbahn
- 130: Erstreckungsebene
- 132: Längsmittelebene
- 134: Bewegungsvorrichtung
- 136: Dämpfungsvorrichtung
- 138: Antriebsvorrichtung
- 140: Bewegungseinheit
- 142: Dämpfungseinheit
- 144: Antriebseinheit
- 146: Kopplungselement
- 148: Linearelement
- 150: Zahnstange
- 152: Rotationselement
- 154: Zahnrad
- 156: Innenseite
- 158: Verbindungselement
- 160: Ende
- 162: Verbindungsabschnitt
- 164: Kopplungsabschnitt
- 166: Zahn
- 168: Rückseite
- 170: Spalt
- 172: Anlagefläche
- 174: Zwischenraum
- 176: Welle
- 178: Rotationsachse
- 180: Öffnung
- 182: Aussparung

- g: Schwerkraftrichtung

## Patentansprüche

1. Führungsvorrichtung (100) zur verschiebbaren Lagerung eines Objekts (110) an einem weiteren Objekt (110), wobei die Führungsvorrichtung (100) Folgendes umfasst:
- mindestens zwei Führungsschienen (112), welche mittels einer Wälzkörperanordnung (120) relativ zueinander bewegbar sind, wobei die Wälzkörperanordnung (120) mehrere Wälzkörper (122) umfasst, welche mittels eines Wälzkörperkäfigs (126) relativ zueinander positioniert und zwischen den mindestens zwei Führungsschienen (112) drehbar gehalten sind;
- eine Bewegungsvorrichtung (134) zur Beeinflussung einer Bewegung der mindestens zwei Führungsschienen (112) relativ zueinander,
wobei die Bewegungsvorrichtung (134) eine Bewegungseinheit (140) umfasst, welche als Dämpfungseinheit (142) und/oder als Antriebseinheit (144) ausgebildet und in einen Schienenrücken (116) einer Führungsschiene (112) integriert ist,
**dadurch gekennzeichnet, dass** der Wälzkörperkäfig (126) eine Aussparung (182) aufweist, so dass mit den Wälzkörpern (122) versehene seitliche Abschnitte des Wälzkörperkäfigs (126) die Dämpfungseinheit (142) und/oder die Antriebseinheit (114) umgreifen.

2. Führungsvorrichtung (100) nach Anspruch 1, **dadurch gekennzeichnet, dass** jede Führungsschiene (112) einen im Wesentlichen C-förmig ausgebildeten Querschnitt aufweist und einen Schienenrücken (116) umfasst, von welchem zwei mit Wälzkörperlaufbahnen (128) versehene Schenkel (118) seitlich weg ragen.

3. Führungsvorrichtung (100) nach einem der Ansprüche 1 oder 2, **dadurch gekennzeichnet, dass** die Bewegungsvorrichtung (134) ein erstes Kopplungselement (146) und ein zweites Kopplungselement (146) umfasst,
wobei das erste Kopplungselement (146) und das zweite Kopplungselement (146) zur Beeinflussung der Bewegung der mindestens zwei Führungsschienen (112) relativ zueinander miteinander gekoppelt oder koppelbar sind,
wobei das erste Kopplungselement (146) direkt an oder relativ zu einer ersten Führungsschiene (112) festgelegt ist oder durch einen Abschnitt oder Teil der ersten Führungsschiene (112) gebildet ist, und/oder
wobei das zweite Kopplungselement (146) direkt an oder relativ zu einer zweiten Führungsschiene (112) festgelegt ist oder durch einen Abschnitt oder Teil der zweiten Führungsschiene (112) gebildet ist.

4. Führungsvorrichtung (100) nach Anspruch 3, **dadurch gekennzeichnet, dass** mindestens eines der Kopplungselemente (146) sich mindestens über eine maximale Verschiebestrecke der Führungsvorrichtung (100) erstreckt, so dass die Kopplungselemente (146) über die gesamte Verschiebestrecke hinweg kontinuierlich miteinander gekoppelt oder koppelbar sind.

5. Führungsvorrichtung (100) nach einem der Ansprüche 1 bis 4, **dadurch gekennzeichnet, dass** die Bewegungsvorrichtung (134) mindestens ein Kopplungselement (146) umfasst, welches an einem Schienenrücken (116) einer der Führungsschienen (112) und/oder an einem Schenkel (118) einer der Führungsschienen (112) angeordnet, insbesondere festgelegt, ist.

6. Führungsvorrichtung (100) nach einem der Ansprüche 1 bis 5, **dadurch gekennzeichnet, dass** die Bewegungsvorrichtung (134) ein als Rotationselement (152), insbesondere als Zahnrad (154), ausgebildetes Kopplungselement (146) und/oder ein oder mehrere als Linearelemente (148), insbesondere als Zahnstange (150), ausgebildete Kopplungselemente (146) umfasst.

7. Führungsvorrichtung (100) nach Anspruch 6, **dadurch gekennzeichnet, dass** eine Rotationsachse (178) des Rotationselements (152) zumindest näherungsweise senkrecht zu einer Erstreckungsebene (130) verläuft, parallel zu welcher sich mindestens ein Schienenrücken (116) mindestens einer Führungsschiene (112) erstreckt.

8. Führungsvorrichtung (100) nach einem der Ansprüche 1 bis 7, **dadurch gekennzeichnet, dass** die Bewegungsvorrichtung (134) ein, zwei oder mehr als zwei Kopplungselemente (146) umfasst, welche vollständig innerhalb eines zwischen den mindestens zwei Führungsschienen (112) gebildeten Zwischenraums (174) angeordnet sind.

9. Führungsvorrichtung (100) nach einem der Ansprüche 1 bis 8, **dadurch gekennzeichnet, dass** die Bewegungsvorrichtung (134) als eine Dämpfungsvorrichtung (136) und/oder als eine Antriebsvorrichtung (138) ausgebildet ist.

10. Führungsvorrichtung (100) nach einem der Ansprüche 1 bis 9, **dadurch gekennzeichnet, dass** die Führungsschienen (112) bezüglich einer senkrecht zu Schienenrücken (116) der beiden Führungsschienen (112) und längs einer Verschieberichtung (114) verlaufenden Längsmittelebene (132) spiegelsymmetrisch ausgebildet sind.

11. Verschiebesystem (102), umfassend zwei Objekte (100) und eine Führungsvorrichtung (100) nach einem der Ansprüche 1 bis 10, mittels welcher eines der beiden Objekte (110) relativ zu dem weiteren der beiden Objekte (110) verschiebbar an dem weiteren Objekt (110) gelagert ist.

12. Verschiebesystem (102) nach Anspruch 11, **dadurch gekennzeichnet, dass** die Führungsvorrichtung (100) bezüglich einer Schwerkraftrichtung (g) zwischen den beiden Objekten (110) angeordnet ist.

13. Verschiebesystem (102) nach einem der Ansprüche 11 oder 12, **dadurch gekennzeichnet, dass** ein oder mehrere Schienenrücken (116) von Führungsschienen (112) der Führungsvorrichtung (100) im Wesentlichen senkrecht zur Schwerkraftrichtung (g) oder schräg hierzu ausgerichtet sind.

14. Verschiebesystem (102) nach einem der Ansprüche 11 bis 13, **dadurch gekennzeichnet, dass** das Verschiebesystem (102) eine Armlehnenvorrichtung (104) ist, wobei eines der beiden Objekte (110) ein Armauflageelement (106) ist und/oder wobei eines der beiden Objekte (110) eine Mittelkonsole (108) eines Kraftfahrzeugs ist.

15. Kraftfahrzeug, umfassend ein oder mehrere Führungsvorrichtungen (100) gemäß einem der Ansprüche 1 bis 10 zur verschiebbaren Lagerung von Bauteilen des Kraftfahrzeugs relativ zueinander.

## Claims

1. Guide device (100) for the displaceable mounting of an object (110) on a further object (110), the guide device (100) comprising:
- at least two guide rails (112) which are movable relative to one another by means of a roller body arrangement (120), the roller body arrangement (120) comprising a plurality of roller bodies (122) which are positioned relative to one another by means of a roller body cage (126) and are rotatably held between the at least two guide rails (112);
- a movement device (134) for influencing a movement of the at least two guide rails (112) relative to one another,
the movement device (134) comprising a movement unit (140) which is designed as a damping unit (142) and/or as a drive unit (144) and is integrated into a rail back (116) of a guide rail (112), **characterized in that** the roller body cage (126) has a recess (182), so that lateral portions of the roller body cage (126) provided with the roller bodies (122) engage around the damping unit (142) and/or the drive unit (114).

2. Guide device (100) according to Claim 1, **characterized in that** each guide rail (112) has a cross-section which is essentially C-shaped and comprises a rail back (116), from which two legs (118) provided with roller body raceways (128) project away laterally.

3. Guide device (100) according to either Claim 1 or Claim 2, **characterized in that** the movement device (134) comprises a first coupling element (146) and a second coupling element (146), wherein the first coupling element (146) and the second coupling element (146) are coupled or can be coupled to one another for influencing the movement of the at least two guide rails (112) relative to each other, wherein the first coupling element (146) is fixed directly to or relative to a first guide rail (112) or is formed by a portion or part of the first guide rail (112), and/or wherein the second coupling element (146) is fixed directly to or relative to a second guide rail (112) or is formed by a portion or part of the second guide rail (112).

4. Guide device (100) according to Claim 3, **characterized in that** at least one of the coupling elements (146) extends at least over a maximum displacement distance of the guide device (100), so that the coupling elements (146) are continuously coupled or can be coupled to one another over the entire displacement distance.

5. Guide device (100) according to any one of Claims 1 to 4, **characterized in that** the movement device (134) comprises at least one coupling element (146) which is arranged on, in particular fixed to, a rail back (116) of one of the guide rails (112) and/or on a leg (118) of one of the guide rails (112).

6. Guide device (100) according to any one of Claims 1 to 5, **characterized in that** the movement device (134) comprises a coupling element (146) designed as a rotating element (152), in particular as a toothed wheel (154), and/or one or more coupling elements (146) designed as linear elements (148), in particular as a toothed rack (150).

7. Guide device (100) according to Claim 6, **characterized in that** an axis of rotation (178) of the rotating element (152) extends at least approximately perpendicular to an extension plane (130), parallel to which at least one rail back (116) of at least one guide rail (112) extends.

8. Guide device (100) according to any one of Claims 1 to 7, **characterized in that** the movement device (134) comprises one, two or more than two coupling elements (146) which are arranged completely within an intermediate space (174) formed between the at least two guide rails (112).

9. Guide device (100) according to any one of Claims 1 to 8, **characterized in that** the movement device (134) is designed as a damping device (136) and/or as a drive device (138).

10. Guide device (100) according to any one of Claims 1 to 9, **characterized in that** the guide rails (112) are formed mirror-symmetrically with respect to a longitudinal center plane (132) extending perpendicularly to the rail back (116) of the two guide rails (112) and along a displacement direction (114).

11. Displacement system (102) comprising two objects (100) and a guide device (100) according to any one of Claims 1 to 10, by means of which one of the two objects (110) is mounted on the further object (110) in a displaceable way relative to the further of the two objects (110).

12. Displacement system (102) according to Claim 11, **characterized in that** the guide device (100) is arranged between the two objects (110) in relation to a direction of gravity (g).

13. Displacement system (102) according to either of Claims 11 or 12, **characterized in that** one or more rail backs (116) of guide rails (112) of the guide device (100) are oriented substantially perpendicularly to the direction of gravity (g) or obliquely thereto.

14. Displacement system (102) according to any one of Claims 11 to 13, **characterized in that** the displacement system (102) is an armrest device (104), wherein one of the two objects (110) is an arm support element (106) and/or wherein one of the two objects (110) is a center console (108) of a motor vehicle.

15. Motor vehicle comprising one or more guide devices (100) according to any one of Claims 1 to 10 for the displaceable mounting of components of the motor vehicle relative to one another.

## Revendications

1. Dispositif de guidage (100) pour le montage de manière à pouvoir coulisser d'un objet (110) sur un autre objet (110), le dispositif de guidage (100) comprenant :
- au moins deux rails de guidage (112) qui peuvent être déplacés l'un par rapport à l'autre au moyen d'un agencement de corps de roulement (120), l'agencement de corps de roulement (120) comprenant plusieurs corps de roulement (122) qui sont positionnés les uns par rapport aux autres au moyen d'une cage de corps de roulement (126) et maintenus de manière à pouvoir tourner entre les au moins deux rails de guidage (112) ;
- un dispositif de déplacement (134) permettant d'influencer un déplacement des au moins deux rails de guidage (112) l'un par rapport à l'autre,
dans lequel le dispositif de déplacement (134) comprend une unité de déplacement (140) réalisée en tant qu'unité d'amortissement (142) et/ou en tant qu'unité d'entraînement (144) et intégrée dans un dos de rail (116) d'un rail de guidage (112), **caractérisé en ce que** la cage de corps de roulement (126) présente un évidement (182), de sorte que des sections latérales de la cage de corps de roulement (126) pourvues des corps de roulement (122) entourent l'unité d'amortissement (142) et/ou l'unité d'entraînement (114).

2. Dispositif de guidage (100) selon la revendication 1, **caractérisé en ce que** chaque rail de guidage (112) présente une section transversale réalisée sensiblement en forme de C et comprend un dos de rail (116) depuis lequel deux branches (118) pourvues de voies de corps de roulement (128) font saillie latéralement.

3. Dispositif de guidage (100) selon l'une des revendications 1 ou 2, **caractérisé en ce que** le dispositif de déplacement (134) comprend un premier élément de couplage (146) et un second élément de couplage (146), dans lequel le premier élément de couplage (146) et le second élément de couplage (146) sont couplés ou peuvent être couplés l'un à l'autre pour influencer le mouvement des au moins deux rails de guidage (112) l'un par rapport à l'autre, dans lequel le premier élément de couplage (146) est fixé directement sur un premier rail de guidage (112) ou par rapport à celui-ci ou est formé par une section ou une partie du premier rail de guidage (112), et/ou dans lequel le second élément de couplage (146) est fixé directement sur un second rail de guidage (112) ou par rapport à celui-ci ou est formé par une section ou une partie du second rail de guidage (112).

4. Dispositif de guidage (100) selon la revendication 3, **caractérisé en ce qu'**au moins l'un des éléments de couplage (146) s'étend au moins sur un tronçon de coulissement maximal du dispositif de guidage (100), de sorte que les éléments de couplage (146) sont couplés ou peuvent être couplés l'un à l'autre en continu sur tout le tronçon de coulissement.

5. Dispositif de guidage (100) selon l'une des revendications 1 à 4, **caractérisé en ce que** le dispositif de déplacement (134) comprend au moins un élément de couplage (146) disposé, en particulier fixé, sur un dos de rail (116) d'un des rails de guidage (112) et/ou sur une branche (118) d'un des rails de guidage (112).

6. Dispositif de guidage (100) selon l'une des revendications 1 à 5, **caractérisé en ce que** le dispositif de déplacement (134) comprend un élément de couplage (146) réalisé en tant qu'élément de rotation (152), en particulier en tant que roue dentée (154), et/ou un ou plusieurs éléments de couplage (146) réalisés en tant qu'éléments linéaires (148), en particulier en tant que crémaillères (150).

7. Dispositif de guidage (100) selon la revendication 6, **caractérisé en ce qu'**un axe de rotation (178) de l'élément de rotation (152) s'étend au moins approximativement perpendiculairement à un plan d'extension (130), au moins un dos de rail (116) d'au moins un rail de guidage (112) s'étendant parallèlement audit plan d'extension.

8. Dispositif de guidage (100) selon l'une des revendications 1 à 7, **caractérisé en ce que** le dispositif de déplacement (134) comprend un, deux ou plus de deux éléments de couplage (146), lesquels sont entièrement disposés à l'intérieur d'un espace intermédiaire (174) formé entre les au moins deux rails de guidage (112).

9. Dispositif de guidage (100) selon l'une des revendications 1 à 8, **caractérisé en ce que** le dispositif de déplacement (134) est réalisé en tant que dispositif d'amortissement (136) et/ou en tant que dispositif d'entraînement (138).

10. Dispositif de guidage (100) selon l'une des revendications 1 à 9, **caractérisé en ce que** les rails de guidage (112) sont réalisés de manière symétrique en miroir par rapport à un plan médian longitudinal (132) s'étendant perpendiculairement au dos de rail (116) des deux rails de guidage (112) et le long d'une direction de coulissement (114).

11. Système de coulissement (102) comprenant deux objets (100) et un dispositif de guidage (100) selon l'une des revendications 1 à 10, au moyen duquel l'un des deux objets (110) est monté de manière à pouvoir coulisser sur l'autre objet (110) par rapport à l'autre des deux objets (110).

12. Système de coulissement (102) selon la revendication 11, **caractérisé en ce que** le dispositif de guidage (100) est disposé entre les deux objets (110) par rapport à une direction de gravité (g).

13. Système de coulissement (102) selon l'une des revendications 11 ou 12, **caractérisé en ce qu'**un ou plusieurs dos de rail (116) de rails de guidage (112) du dispositif de guidage (100) sont orientés sensiblement perpendiculairement ou obliquement à la direction de gravité (g).

14. Système de coulissement (102) selon l'une des revendications 11 à 13, **caractérisé en ce que** le système de coulissement (102) est un dispositif d'accoudoir (104), l'un des deux objets (110) étant un élément de repose-bras (106) et/ou l'un des deux objets (110) étant une console centrale (108) d'un véhicule automobile.

15. Véhicule automobile comprenant un ou plusieurs dispositifs de guidage (100) selon l'une des revendications 1 à 10 pour le montage de manière à pouvoir coulisser de pièces du véhicule automobile les unes par rapport aux autres.
